# EUROPEAN PATENT APPLICATION

(11) **EP 3 351 099 A1**
(43) Date of publication of application: **25.07.2018**
(21) Application number: 17151913.5
(22) Date of filing: 18.01.2017
(51) Int. Cl.: A01M 23/16, A01M 23/30

(54) **SNAP TRAP ENCLOSURE WITH TRAP RELEASE INDICATOR**

(71) Applicant: Soren Fisker ApS, 9000 Aalborg (DK); Camro ApS, 9610 Norager (DK)
(72) Inventor: Fisker, Søren, 9000 Aalborg (DK)
(74) Representative: Larsen & Birkeholm A/S

(57) **Abstract**

The present invention relates to a snap trap enclosure for placement on the ground. The snap trap enclosure comprises a housing, and a snap trap. The housing comprises a rat and/or mouse entry opening positioned in the side or bottom wall. The top or side wall comprises an indicator unit.

## Description

### Technical field of the invention

The present invention relates to the field of traps for rats and mice, and in particular to traps in a safe box for use on the ground.

### Background of the invention

It is a continued problem with rats and/or mice in our houses, and an effective rodent control is therefore imminent. The use of poison in trap enclosures has been the primary choice of rodent control, since the traps did not need to be frequently controlled. However, the use of poison is now being prohibited to avoid spreading the poison to predators.

Therefore, mechanical traps, such as snap traps are reintroduced. To avoid that the snap traps will kill or hurt by catches, the snap traps are positioned in snap trap enclosures. The problem with such snap trap enclosures is that the user will have to open them to control if the snap trap has been triggered.

### Object of the Invention

The objective of the present invention is to provide a snap trap enclosure that can inform the user of a triggered snap trap without having to open the snap trap enclosure.

### Description of the Invention

One aspect of the present invention relates to a
snap trap enclosure for placement on the ground, the snap trap enclosure comprising:
- a housing with a rat and/or mouse entry opening positioned in the side or bottom wall; and
- a snap trap positioned within the housing; wherein the top wall or a side wall of the housing comprises an indicator unit adapted for indicating when the snap trap has been released.

In one or more embodiments, the snap trap comprises a snap bar that extends towards the top wall of the housing when positioned in the charged position. This type of snap trap responds faster than the traditional snap traps, as the snap bar travels a shorter distance.

In one or more embodiments, the snap trap comprises a snap bar that extends towards the top wall of the housing when positioned in the charged position, and wherein the indicator unit comprises means adapted for a) resting on, or b) engaging with, the snap bar positioned in the charged position. This configuration allows for a minimal reduction of the snap bar response time, while being able to measure when the snap bar is released or triggered.

In one or more embodiments, the means adapted for a) resting on, or b) engaging with, the snap bar positioned in the charged position is part of a switch device, and wherein the switch device activates an indicator in the indicator unit when the means adapted for a) resting on, or b) engaging with, the snap bar positioned in the charged position loses its contact with the snap bar.

In one or more embodiments, the switch device deactivates the indicator in the indicator unit when the means adapted for a) resting on, or b) engaging with, the snap bar positioned in the charged position is in contact with the snap bar. This configuration is a simple one-switch solution, requiring only few components.

In one or more embodiments, the means adapted for a) resting on, or b) engaging with, the snap bar positioned in the charged position comprises a flexible member, and wherein a part of the flexible member is adapted for being moved from a first position to a second position by the snap bar of the snap trap when it is being positioned in the charged position; wherein when the flexible member is in the first position it is configured to activate an indicator in the indicator unit, and wherein when the flexible member is in the second position it is configured to deactivate the indicator in the indicator unit. The flexible member may be made from any type of flexible material, such as a metal plate (leaf spring) or a polymeric material. The part of the flexible member capable of being moved from a first position to a second position may be a free end, or a middle segment.

In one or more embodiments, the means adapted for a) resting on, or b) engaging with, the snap bar positioned in the charged position comprises a hinged elongate member, and wherein a the hinged elongate member is adapted for being moved from a first position to a second position by the snap bar of the snap trap when it is being positioned in the charged position; wherein when the hinged elongate member is in the first position it is configured to activate an indicator in the indicator unit, and wherein when the hinged elongate member is in the second position it is configured to deactivate the indicator in the indicator unit.

In one or more embodiments, the top wall or a side wall of the housing is configured as a lid.

In one or more embodiments, the lid is hinged.

In one or more embodiments, the indicator unit is battery driven, and wherein the indicator unit is configured to indicate when the battery level is low.

In one or more embodiments, the indicator unit is configured to indicate with light and/or sound.

The dimensions of the rat and/or mouse entry opening are important. A rat is not prone to enter a narrow entry opening below 40 mm.

In one or more embodiments, the rat and/or mouse entry opening is sized and configured to leave an opening with a free height of at least 40 mm, such as within the range of 40-100 mm, e.g. at least 45 mm, such as within the range of 45-95 mm, e.g. at least 50 mm, such as within the range of 50-90 mm, e.g. at least 55 mm, such as within the range of 55-85 mm, e.g. at least 60 mm, such as within the range of 60-80 mm, e.g. at least 65 mm, such as within the range of 70-75 mm, e.g. at least 70 mm.

In one or more embodiments, the rat and/or mouse entry opening is sized and configured to leave an opening with a clear width of at least 40 mm, such as within the range of 40-100 mm, e.g. at least 45 mm, such as within the range of 45-95 mm, e.g. at least 50 mm, such as within the range of 50-90 mm, e.g. at least 55 mm, such as within the range of 55-85 mm, e.g. at least 60 mm, such as within the range of 60-80 mm, e.g. at least 65 mm, such as within the range of 70-75 mm, e.g. at least 70 mm.

In one or more embodiments, the snap trap enclosure comprises means for securing the housing to the ground and/or to a wall near the ground, to avoid that the snap trap enclosure can be turned on its side. Such means may be bolts or earth anchors.

In one or more embodiments, a part of the side wall is configured as a door/lid with a lock for restricted access to the snap trap located within the housing.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 is a perspective view of a snap trap enclosure 100 in accordance with various embodiments of the invention;
Figure 2 is a perspective view of a snap trap enclosure in accordance with various embodiments of the invention, and where the top lid has been removed; and
Figure 3 is a side view into a halved snap trap enclosure in accordance with various embodiments of the invention.

### References

- 100: Snap trap enclosure
- 200: Housing
- 210: Rat and/or mouse entry opening
- 220: Side wall
- 230: Top wall
- 300: Snap trap
- 310: Snap bar
- 400: Indicator unit
- 410: Means adapted for a) resting on, or b) engaging with, the snap bar positioned in the charged position
- 420: Indicator
- 430: Battery

### Detailed Description of the Invention

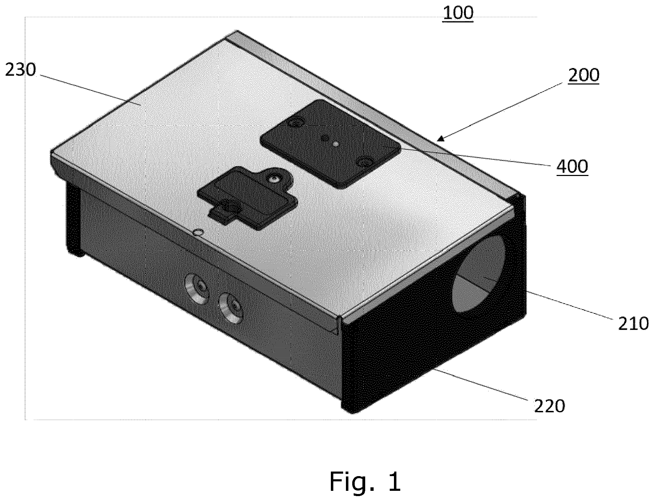

Figure 1 is a perspective view of a snap trap enclosure 100 in accordance with various embodiments of the invention. The snap trap enclosure 100 comprises a housing 200, and a snap trap 300 (not shown). The housing 200 comprises a rat and/or mouse entry opening 210 positioned in the side wall 220. The top wall 230 is here shown comprising an indicator unit 400, and is configured as a lid.

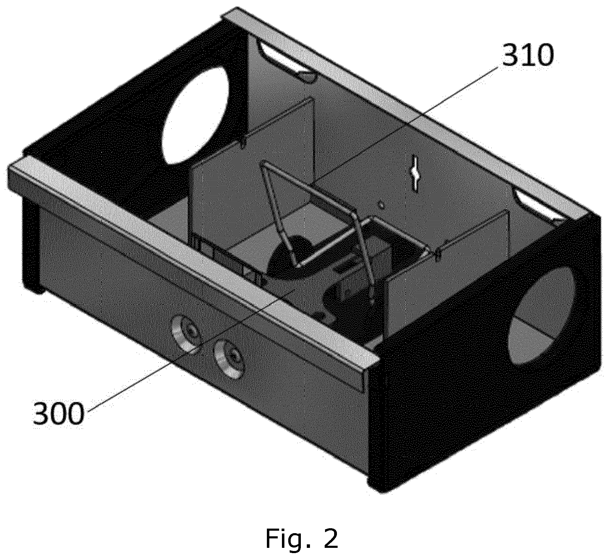

In Figure 2, the top wall 230 (Figure 1) has been removed, and the snap trap 300 is visible with its snap bar 310 positioned in the charged position. The snap bar 310 extends towards the removed top wall. As the indicator unit is part of the top wall, it cannot be seen in Figure 2.

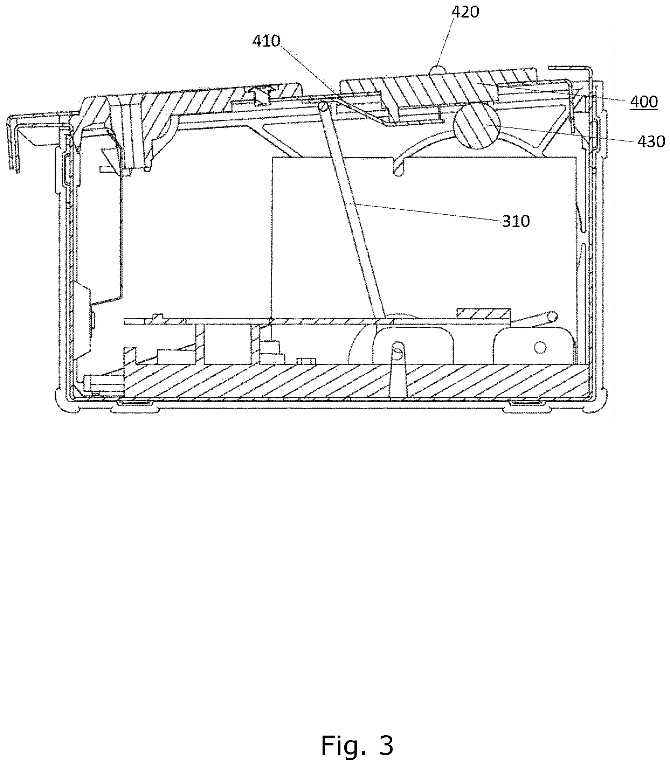

Figure 3 shows a side view into a halved snap trap enclosure in accordance with various embodiments of the invention. The indicator unit 400 is here shown with means 410 adapted for resting on the snap bar 310 positioned in the charged position. The means 410 is part of a switch device, and the switch device activates an indicator 420 (here exemplified as a light diode) in the indicator unit 400 when the means 410 loses its contact with the snap bar 310, as the snap bar moves downwards when triggered. The user of the snap trap enclosure may thereby see if the snap trap has been triggered without opening the snap trap enclosure. The indicator unit 400 is battery 430 driven.

## Claims

1. A snap trap enclosure (100) for placement on the ground, the snap trap enclosure (100) comprising:
- a housing (200) with a rat and/or mouse entry opening (210) positioned in the side or bottom wall (220); and
- a snap trap (300) positioned within the housing (200); **characterized in that** the top wall (230) or a side wall (220) of the housing (200) comprises an indicator unit (400) adapted for indicating when the snap trap (300) has been released.

2. A snap trap enclosure (100) according to claim 1, **characterized in that** the snap trap (300) comprises a snap bar (310) that extends towards the top wall (230) of the housing (200) when positioned in the charged position, and wherein the indicator unit (400) comprises means (410) adapted for a) resting on, or b) engaging with, the snap bar (310) positioned in the charged position.

3. A snap trap enclosure (100) according to claim 2, **characterized in that** the means (410) adapted for a) resting on, or b) engaging with, the snap bar (310) positioned in the charged position is part of a switch device, and wherein the switch device activates an indicator (420) in the indicator unit (400) when the means (410) adapted for a) resting on, or b) engaging with, the snap bar (310) positioned in the charged position loses its contact with the snap bar (310).

4. A snap trap enclosure (100) according to claim 3, **characterized in that** the switch device deactivates the indicator (420) in the indicator unit (400) when the means (410) adapted for a) resting on, or b) engaging with, the snap bar (310) positioned in the charged position is in contact with the snap bar (310).

5. A snap trap enclosure (100) according to claim 2, **characterized in that** the means (410) adapted for a) resting on, or b) engaging with, the snap bar (310) positioned in the charged position comprises a flexible member, and wherein a part of the flexible member is adapted for being moved from a first position to a second position by the snap bar (310) of the snap trap (300) when it is being positioned in the charged position; wherein when the flexible member is in the first position it is configured to activate an indicator (420) in the indicator unit (400), and wherein when the flexible member is in the second position it is configured to deactivate the indicator (420) in the indicator unit (400).

6. A snap trap enclosure (100) according to any one of the claims 1-5, **characterized in that** the top wall (230) or a side wall (220) of the housing (200) is configured as a lid.

7. A snap trap enclosure (100) according to claim 6, **characterized in that** the lid is hinged.

8. A snap trap enclosure (100) according to any one of the claims 1-7, **characterized in that** the indicator unit (400) is battery (430) driven, and wherein the indicator unit (400) is configured to indicate when the battery level is low.

9. A snap trap enclosure (100) according to any one of the claims 1-8, **characterized in that** the indicator unit (400) is configured to indicate with light and/or sound.
